# EUROPEAN PATENT APPLICATION

(11) **EP 4 538 924 A1**
(43) Date of publication of application: **16.04.2025**
(21) Application number: 23877475.6
(22) Date of filing: 28.08.2023
(51) Int. Cl.: G06F 30/392, G06F 30/394, G06F 30/12, G06F 115/12

(54) **PCB DESIGN DEVICE USING RULE INFORMATION, AND METHOD FOR CONTROLLING SAME**

(30) Priority: 11.10.2022 KR 20220130062
(71) Applicant: Samsung Electronics Co., Ltd., Suwon-si, Gyeonggi-do 16677 (KR)
(72) Inventor: LEE, Seungjae, Suwon-si Gyeonggi-do 16677 (KR); LIM, Jongrae, Suwon-si Gyeonggi-do 16677 (KR); LEE, Soonjung, Suwon-si Gyeonggi-do 16677 (KR)
(74) Representative: Appleyard Lees IP LLP
(86) International application number: PCT/KR2023/012726
(87) International publication number: WO 2024/080545

(57) **Abstract**

A Printed Circuit Board (PCB) design device is provided. The PCB design device includes: a display, memory storing rule information applied to PCB design, one or more processors configured to, based on electronic circuit information of an electronic device, identify connection information between a plurality of circuit elements included in the electronic circuit information, obtain at least one group by classifying the plurality of circuit elements according to the identified connection information, identify one of the circuit elements included in the at least one group as a representative circuit element based on the rule information, based on a user command being received, place the identified representative circuit element at a position corresponding to the user command within a screen of the display, and control the display to place and display remaining circuit elements among the circuit elements, excluding the representative circuit element, to be adjacent with reference to the representative circuit element.

## Description

### [Technical Field]

The disclosure relates to a PCB design device and a controlling method thereof, and for example, to a PCB design device that places a plurality of circuit elements using rule information and a controlling method thereof.

### [Background Art]

A PCB refers to a thin plate on which various types of electrical components such as direct circuits, resistors, and switches are soldered. As various types of electronic devices are being developed and popularized, the number of electrical components mounted on PCBs in electronic devices is rapidly increasing and accordingly, the time required for PCB design is also increasing proportionally.

For example, a PCB design process involves arranging a plurality of circuit elements included in electronic circuit information (e.g., circuit diagram) on a PCB and determining wiring between the plurality of circuit elements.

The process of placing multiple circuit elements on a PCB requires manual labor by the designer, so the time required by the designer to place the circuit elements increases as the number of multiple circuit elements increases.

Therefore, there have been various demands on a method of efficiently placing a very large number of circuit elements on a PCB while minimizing/reducing the designer's manual effort and reducing the design time.

### [Disclosure]

### [Technical Solution]

A PCB design device according to an example embodiment includes: a display, memory storing rule information applied to printed circuit board (PCB) design, at least one processor, comprising processing circuitry, individually and/or collectively, configured to: based on electronic circuit information of an electronic device, identify connection information between a plurality of circuit elements included in the electronic circuit information, obtain at least one group by classifying the plurality of circuit elements according to the identified connection information, identify one of the circuit elements included in the at least one group as a representative circuit element based on the rule information, based on a command being received, place the identified representative circuit element at a position corresponding to the command within a screen of the display, and control the display to place and display remaining circuit elements among the circuit elements, excluding the representative circuit element, to be adjacent with reference to the representative circuit element.

A method of controlling a Printed Circuit Board (PCB) design device including rule information applied to PCB design according to an example embodiment includes: based on electronic circuit information of an electronic device, identifying connection information between a plurality of circuit elements included in the electronic circuit information, obtaining at least one group by classifying the plurality of circuit elements according to the identified connection information, identifying one of the circuit elements included in the at least one group as a representative circuit element based on the rule information, based on a command being received, place the identified representative circuit element at a position corresponding to the command within a screen, and placing and displaying remaining circuit elements among the circuit elements, excluding the representative circuit element, to be adjacent with reference to the representative circuit element.

In a non-transitory computer-readable recording medium including a program that, when executed by at least one processor, comprising processing circuitry, individually, causes a PCT design device to execute a method of controlling the PCB design device including rule information applied to PCB design according to an example embodiment, the method of controlling the PCB design device including: based on electronic circuit information of an electronic device, identifying connection information between a plurality of circuit elements included in the electronic circuit information, obtaining at least one group by classifying the plurality of circuit elements according to the identified connection information, identifying one of the circuit elements included in the at least one group as a representative circuit element based on the rule information, based on a command being received, place the identified representative circuit element at a position corresponding to the command within a screen, and placing and displaying remaining circuit elements among the circuit elements, excluding the representative circuit element, to be adjacent with reference to the representative circuit element.

### [Description of Drawings]

FIG. 1 is a diagram illustrating electronic circuit information according to various embodiments;
FIG. 2 is a block diagram illustrating an example configuration of a PCB design device according to various embodiments;
FIG. 3 is a diagram illustrating a plurality of circuit elements corresponding to electronic circuit information according to various embodiments;
FIG. 4 is a diagram illustrating a representative circuit element among a plurality of circuit elements according to various embodiments;
FIG. 5 is a diagram illustrating at least one group according to electronic circuit information according to various embodiments;
FIG. 6 is a diagram illustrating example rule information according to various embodiments;
FIG. 7 is a diagram illustrating a representative circuit element in the form of Ball Grid Array (BGA) according to various embodiments;
FIG. 8 is a diagram illustrating an example representative circuit element in the form of BGA according to various embodiments; and
FIG. 9 is a flowchart illustrating an example method of controlling a PCB design device according to various embodiments.

### [Detailed Description of Embodiments]

Hereinafter, the disclosure will be described in greater detail with reference to the accompanying drawings.

General terms that are currently widely used are selected as the terms used in the disclosure in consideration of their functions in the disclosure, but may be changed based on the intention of those skilled in the art or a judicial precedent, the emergence of a new technique, or the like. In addition, in a specific case, terms that are arbitrarily chosen may exist, in which case, the meanings of such terms will be described in detail in the corresponding descriptions in the disclosure. Therefore, the terms used in the disclosure are defined on the basis of the meanings of the terms and the overall contents throughout the disclosure rather than simple names of the terms.

In the disclosure, the expressions "have", "may have", "include" or "may include" indicate existence of corresponding features (e.g., components such as numeric values, functions, operations, or components), but do not exclude presence of additional features.

An expression, "at least one of A or/and B" should be understood as indicating any one of "A", "B" and "both of A and B."

Expressions "first", "second", "1st," "2nd," or the like, used in the disclosure may indicate various components regardless of sequence and/or importance of the components, will be used simply to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

Singular expressions include plural expressions unless the context clearly dictates otherwise. In this disclosure, terms such as "comprise" or "have" are intended to designate the presence of features, numbers, steps, operations, components, parts, or a combination thereof described in the disclosure, but are not intended to exclude in advance the possibility of the presence or addition of one or more of other features, numbers, steps, operations, components, parts, or a combination thereof.

In various example embodiments, a "module" or a "unit" may perform at least one function or operation, and be implemented as hardware or software or be implemented as a combination of hardware and software. In addition, a plurality of "modules" or a plurality of "units" may be integrated into at least one module and be implemented as at least one processor (not shown) except for a 'module' or a 'unit' that needs to be implemented as specific hardware.

In this disclosure, the term 'user' may refer to a person using an electronic device or an apparatus using an electronic device (e.g., an artificial intelligence electronic device).

Hereinafter, various example embodiments of the present disclosure will be described in greater detail with reference to the accompanying drawings.

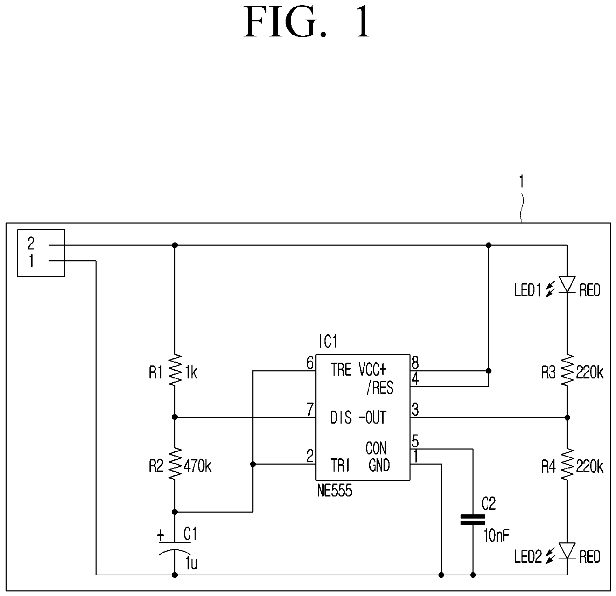

FIG. 1 is a diagram illustrating example electronic circuit information according to various embodiments.

FIG. 1 illustrates an example of electronic circuit information 1 of an electronic device.

The electronic circuit information 1 includes a circuit diagram, which is an image that displays circuit design information in a particular view, and may also be referred to as schematic, electrical drawing, electronic drawing, product design information, circuit design information, and the like, but will be referred to herein as the electronic circuit information 1 for convenience of explanation.

According to an embodiment, the electronic circuit information 1 may represent each of a plurality of circuit elements for performing one function of an electronic device with a corresponding display symbol, and may represent a connection relationship between the plurality of circuit elements (or connection information between the plurality of circuit elements).

The electronic circuit information 1 may not indicate the actual location (or actual placement) of each of the plurality of circuit elements, and in order to indicate the actual location of each of the plurality of circuit elements, a location to place each of the plurality of circuit elements on the printed circuit board (PCB) must be determined based on the electronic circuit information 1.

The disclosure describes various example embodiments in which, in the process of designing a PCB based on electronic circuit information 1, a plurality of circuit elements included in the electronic circuit information 1 are automatically placed based on rule information, and as the plurality of circuit elements are automatically placed, the time required for designing the PCB is reduced.

A PCB may refer, for example, to a thin plate on which electrical elements such as direct circuits, resistors, or switches, are soldered. In order for a circuit to be implemented on a PCB, the PCB must have electrical elements mounted thereon, and the elements must be electrically connected.

The general PCB design process is briefly described as follows. When the electronic circuit information 1 of the electronic device is completed, a plurality of circuit elements to be placed on the PCB are determined according to the electronic circuit information 1, and the plurality of circuit elements are placed on the PCB. The wiring between the plurality of circuit elements is determined according to the PCB design process. The electrical connection between the mounted elements is made using a PCB pattern. The PCB pattern enables electrical connection between the plurality of circuit elements on the PCB. The process of connecting a plurality of circuit elements using a PCB pattern during PCB design is called routing.

In the prior art PCB design process, the process of placing a plurality of circuit elements on a PCB according to the electronic circuit information 1 takes a considerable amount of time in proportion to the increase in the number of the plurality of circuit elements.

For example, when the electronic circuit information 1 of an electronic device includes about 2000 circuit elements, the process of placing the plurality of circuit elements on a PCB requires a user (e.g., a PCB designer) to search for each of the plurality of circuit elements and place them on the PCB, and to rearrange specific elements (e.g., to place them on the top of the PCB or the bottom of the PCB, or to rotate the placement direction of the circuit elements), so the process of placing the plurality of circuit elements in the prior art PCB design process is a time-consuming process.

According to various example embodiments of the present disclosure, the process of placing a plurality of circuit elements is automated, thereby reducing the design time.

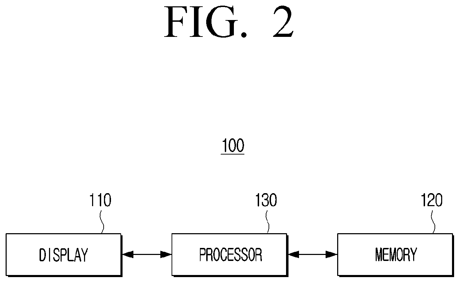

FIG. 2 is a block diagram illustrating an example configuration of a PCB design device according to various embodiments.

A PCB design device 100 according to an embodiment includes a display 110, memory 120, and a processor (e.g., including processing circuitry) 130.

The display 110 according to an embodiment may be implemented as various types of displays such as liquid crystal display (LCD), organic light-emitting diode (OLED), Liquid Crystal on Silicon (LCoS), Digital Light Processing (DLP), quantum dot (QD) display panel, quantum dot light-emitting diodes (QLED), Micro light-emitting diodes (µLED), Mini LED, etc.

The PCB design device 100 may be implemented as a touch screen combined with a touch sensor, a flexible display, a rollable display, a 3D display, a display in which a plurality of display modules are physically connected, etc.

The memory 120 according to an embodiment may store data required for various embodiments of the present disclosure. The memory 120 may be implemented in the form of memory embedded in the PCB design device 100, or it may be implemented in the form of memory removably attached to the PCB design device 100, depending on the purpose of storing the data. For example, data for driving the PCB design device 100 may be stored in the memory embedded in the PCB design device 100, and data for expanding the functionality of the PCB design device 100 may be stored in the memory removably attached to the PCB design device 100. The memory embedded in the PCB design device 100 may be implemented as at least one of volatile memory (e.g., dynamic RAM (DRAM), static RAM (SRAM), or synchronous dynamic RAM (SDRAM), etc.), non-volatile memory (e.g: one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash, etc.), a hard drive, or a solid state drive (SSD). In addition, the memory removably attached to the PCB design device 100 may be implemented in the form of a memory card (e.g., compact flash (CF), secure digital (SD), micro secure digital (Micro-SD), mini secure digital (Mini-SD), extreme digital (xD), multi-media card (MMC), etc.), external memory connectable to a USB port (e.g., USB memory), etc.

In an example, the memory 120 may store a computer program including at least one instruction or a set of instructions for controlling the PCB design device 100.

According to an embodiment, various data may be stored in external memory of the processor 130, or some of the data may be stored in internal memory of the processor 130 and others may be stored in external memory.

For example, the memory 120 may store rule information applied to the PCB design. A specific description of the rule information will be described later.

The one or more processors 130 according to an embodiment may include various processing circuitry and control the overall operations of the PCB design device 100. For example, the PCB design device 100 may be implemented as various forms of electronic devices capable of running a PCB artwork program, and the one or more processors 130 may control the overall operations of the electronic device.

The processor 130 according to an embodiment may be implemented as a digital signal processor (DSP) for processing digital signals, a microprocessor, or a Time Controller (TCON). However, the processor 130 is not limited thereto, and may include one or more of a central processing unit (CPU), a Micro Controller Unit (MCU), a micro processing unit (MPU), a controller, an application processor (AP), a communication processor (CP), an advanced RISC machine (ARM) processor, and an Artificial Intelligence (AI) processor or may be defined by the corresponding term. Further, the processor 130 may be implemented in a system-on-chip (SoC) or a large scale integration (LSI) in which a processing algorithm is embedded, or may be implemented in the form of a field programmable gate array (FPGA). The processor 130 may perform various functions by executing computer executable instructions stored in the memory.

The one or more processors 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or any combination of the other components of the electronic device, and may perform communication-related operations or data processing. The one or more processors 130 may execute one or more programs or instructions stored in the memory. For example, the one or more processors 130 may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to one or more embodiments, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 130 may be implemented as a single core processor comprising a single core, or as one or more multicore processors including a plurality of cores (e.g., homogeneous multicore or heterogeneous multicore). When the one or more processors are implemented as multicore processors, each of the plurality of cores included in a multicore processor may include a processor internal memory, such as a cache memory and an on-chip memory, and a common cache shared by the plurality of cores may be included in the multicore processor. Further, each of the plurality of cores (or some of the plurality of cores) included in the multi-core processor may independently read and perform program instructions to implement the method according to one or more embodiments, or all (or some) of the plurality of cores may be coupled to read and perform program instructions to implement the method according to one or more embodiments.

When a method according various embodiments includes a plurality of operations, the plurality of operations may be performed by one core of a plurality of cores included in a multi-core processor, or may be performed by a plurality of cores. For example, when a first operation, a second operation, and a third operation are performed by a method according to one or more embodiments, all of the first operation, the second operation, and the third operation may be performed by the first core included in the multi-core processor, or the first operation and the second operation may be performed by the first core included in the multi-core processor and the third operation may be performed by the second core included in the multi-core processor.

In the various embodiments of the present disclosure, the processor may refer, for example, to a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, etc., but the core is not limited to the various embodiments of the present disclosure.

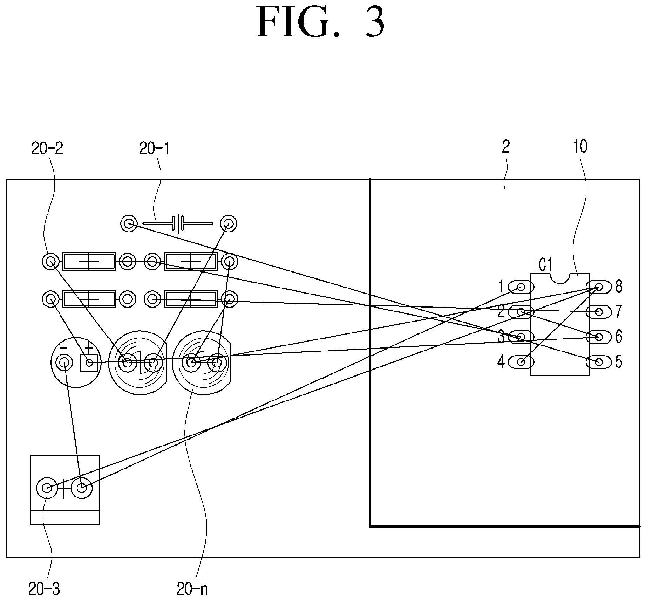

The one or more processors 130 according to an embodiment may load (or parse) the electronic circuit information 1 to identify each of the plurality of circuit elements included in the electronic circuit information 1, and may identify connection information between the plurality of circuit elements. For example, the one or more processors 130 may identify a net connection between the plurality of circuit elements based on the electronic circuit information 1, which will be described in detail with reference to FIG. 3.

FIG. 3 is a diagram illustrating an example of a plurality of circuit elements corresponding to electronic circuit information according to various embodiments.

Referring to FIG. 3, the one or more processors 130 may identify a plurality of circuit elements included in the electronic circuit information 1 based on the electronic circuit information 1 as shown in FIG. 1, and may display the identified plurality of circuit elements on the screen of the display 110. For example, the one or more processors 130 may display a footprint corresponding to each of the plurality of circuit elements on the screen.

In addition, the one or more processors 130 may control the display 110 to display on the screen connection information between the plurality of circuit elements included in the electronic circuit information 1.

As shown in FIG. 3, in the prior art PCB design process, the user must directly place each of a plurality of circuit elements on an area of the screen corresponding to a PCB board (hereinafter, referred to as layout 2), and design electrical connection between the placed multiple circuit elements. As described above, as the number of the plurality of circuit elements increases, the time required for the design process increases rapidly because the user must directly place each of the plurality of circuit elements in the layout.

The one or more processors 130 according to an embodiment may classify the plurality of circuit elements into at least one group based on connection information between the plurality of circuit elements included in the electronic circuit information 1 as shown in FIG. 1.

For example, when the plurality of circuit elements are depicted as being divided into a plurality of groups (or blocks) according to the convenience of the user who designed the electronic circuit information 1, the one or more processors 130 may may obtain a plurality of groups by classifying the plurality of circuit elements into groups as illustrated in the electronic circuit information 1.

For example, when the electronic circuit information 1 includes a plurality of circuit elements that are depicted as being divided into a first group and a second group, the one or more processors 130 may divide the plurality of circuit elements into the first group and the second group. The one or more processors 130 may identify one of the circuit elements included in each of the plurality of groups as a representative circuit element.

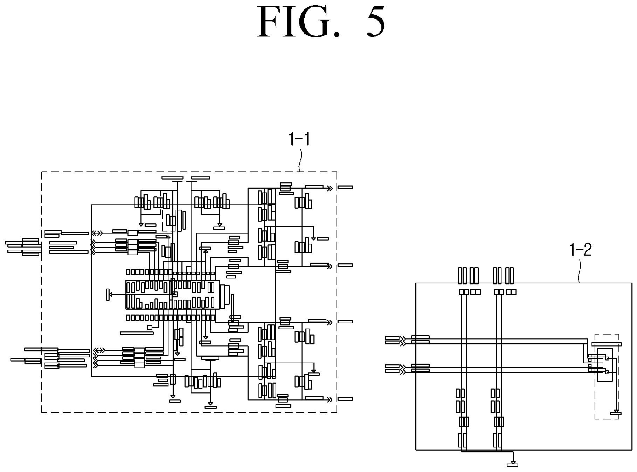

FIG. 3 illustrates an example assuming that the electronic circuit information 1 includes a group of circuit elements for convenience of explanation, and, by referring to FIG. 3, an example where the one or more processors 130 identify one of the circuit elements included in one group as a representative circuit element will be described and, by referring to FIG. 5, an example where the one or more processors 130 identify one of the circuit elements included in each of a plurality of groups as a representative circuit element will be described in detail.

Referring to FIG. 3, the one or more processors 130 may identify one of the circuit elements included in one group as a representative circuit element 10 based on the rule information.

In an example, the rule information may include information about a representative circuit element. For example, the rule information may include information about a representative circuit element, such as an integrated circuit (IC), a jack, a connector, a tuner, and the like.

The representative circuit element is not limited to the circuit element described above, and various types of circuit elements may be representative circuit elements depending on the designer's settings or the designer's choice.

Based on the rule information, the one or more processors 130 may identify at least one of an integrated circuit (IC), a jack, a connector, or a tuner of the plurality of circuit elements as the representative circuit element 10 based on the rule information.

When a command (e.g., a user command) is received, the one or more processors 130 may place the identified representative circuit element 10 at a position within the layout 2 corresponding to the user command.

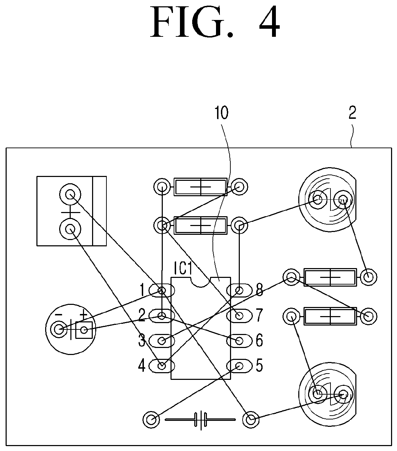

Subsequently, the one or more processors 130 may display the remaining circuit elements 20-1, 20-2, 20-3 ..., 20-n of the plurality of circuit elements, excluding the representative circuit element 10, adjacent to the representative circuit element 10 within the layout 2. A detailed description thereof will be provided with reference to FIG. 4.

FIG. 4 is a diagram illustrating a representative circuit element among a plurality of circuit elements according to various embodiments.

Referring to FIG. 4, as described above, the one or more processors 130 may identify the representative circuit element 10 among the plurality of circuit elements based on the rule information, and when the identified representative circuit element 10 is placed within the layout 2 in accordance with a user command, may automatically place the remaining circuit elements 20-1, 20-2, ..., 20-n (see, e.g., FIG. 3) adjacent to the representative circuit element 10.

The solid lines shown in FIGS. 3 and 4 may represent a connection relationship (or net connection) between the plurality of circuit elements obtained based on the electronic circuit information 1 shown in FIG. 1. The solid lines may be referred to as Airwires, Ratsnest or the like.

The one or more processors 130 according to an embodiment may sequentially place the remaining circuit elements 20-1, 20-2, ..., 20-n adjacent to the representative circuit element 10 based on the rule information.

An example of a rule applied to PCB design based on rule information is described in greater detail below.

The one or more processors 130 may set a priority for the remaining circuit elements 20-1, 20-2, ..., 20-n based on the rule information.

The one or more processors 130 may sequentially place the remaining circuit elements 20-1, 20-2, ..., 20-n with reference to the representative circuit element 10 according to the set priority.

For example, based on the rule information, the one or more processors 130 may set the circuit elements corresponding to power-related elements or crystal elements among the remaining circuit elements 20-1, 20-2, ..., 20-n as the highest priority based on rule information.

Accordingly, the one or more processors 130 may place the power-related elements or the crystal elements among the remaining circuit elements 20-1, 20-2, ..., 20-n preferentially adjacent to the representative circuit element 10.

The one or more processors 130 may place the representative circuit element 10 and each of the remaining circuit elements 20-1, 20-2, ..., 20-n such that they do not overlap with each other.

An example of a rule applied to PCB design based on rule information, is described in greater detail below.

The one or more processors 130 may identify at least one circuit element connected to a pin included in the representative circuit element 10 among the remaining circuit elements 20-1, 20-2, ..., 20-n.

Once the representative circuit element 10 is placed, the one or more processors 130 may place the identified at least one circuit element preferentially adjacent to the representative circuit element 10.

Thus, the one or more processors 130 may place the circuit elements that are not connected to the pin included in the representative circuit element 10 among the remaining circuit elements 20-1, 20-2, ..., 20-n at a relatively later time.

An example of a rule applied to PCB design based on rule information is described in greater detail below.

The one or more processors 130 may identify at least one circuit element connected to each of a plurality of pins included in the representative circuit element 10 among the remaining circuit elements 20-1, 20-2, ..., 20-n.

Once the representative circuit element 10 is placed, the one or more processors 130 may sequentially place the identified at least one circuit element based on the pin number of each of the plurality of pins.

For example, referring to FIG. 4, when the representative circuit element 10 includes pins 1 to 8, the one or more processors 130 may preferentially place the circuit element connected to pin 1, sequentially place the circuit elements connected to pins 2 to 7, and then place the circuit element connected to pin 8 relatively later. The one or more processors 130 may place the circuit elements not connected to the representative circuit element 10 last.

An example of a rule applied to PCB design based on rule information is described in greater detail below.

The one or more processors 130 may identify a first circuit element and a second circuit element connected to the pin included in the representative circuit element 10 among the remaining circuit elements 20-1, 20-2, ..., 20-n.

For example, when the first circuit element and the second circuit element connected to a first pin included in the representative circuit element 10 are identified, the one or more processors 130 may, based on depth information included in the electronic circuit information 1, preferentially place the first circuit element corresponding to a first depth with reference to the representative circuit element 10, and place the second circuit element corresponding to a second depth relatively later.

The depth information may refer to information for identifying a plurality of electronic circuit information when there are a plurality of electronic circuit information including the representative circuit element 10 described above. For example, first electronic circuit information including the representative circuit element 10 may include a first circuit element connected to a first pin included in the representative circuit element 10, and second electronic circuit information including the representative circuit element 10 may include a second circuit element connected to a second pin included in the representative circuit element 10. In this case, the one or more processors 130 may, based on the depth information, place the plurality of circuit elements included in the first electronic circuit information (e.g., including the first circuit element) adjacent to the representative circuit element 10, and subsequently place the plurality of circuit elements included in the second electronic circuit information (e.g., including the second circuit element) adjacent to the representative circuit element 10.

FIG. 5 is a diagram illustrating an example of at least one group according to electronic circuit information according to various embodiments.

Referring to FIG. 5, the one or more processors 130 may classify the plurality of circuit elements into at least one group based on connection information between the plurality of circuit elements included in the electronic circuit information 1.

For example, when the plurality of circuit elements are depicted as being divided into a plurality of groups (or blocks) according to the convenience of the user who designed the electronic circuit information 1, the one or more processors 130 may obtain a plurality of groups by classifying the plurality of circuit elements into groups as illustrated in the electronic circuit information 1.

For example, as shown in FIG. 5, when the electronic circuit information 1 includes a plurality of circuit elements depicted as being divided into a first group 1-1 and a second group 1-2, the one or more processors 130 may classify the plurality of circuit elements into the first group 1-1 and the second group 1-2.

The one or more processors 130 may identify a representative circuit element among the circuit elements included in the first group 1-1.

Once the representative circuit element is placed on the layout 2, the one or more processors 130 may sequentially place the remaining circuit elements among the circuit elements included in the first group 1-1 based on the rule information with reference to the representative circuit element.

The one or more processors 130 may identify a representative circuit element among the circuit elements included in the second group 1-2.

Once the representative circuit element is placed on the layout 2, the one or more processors 130 may sequentially place the remaining circuit elements among the circuit elements included in the second group 1-2 based on the rule information with reference to the representative circuit element.

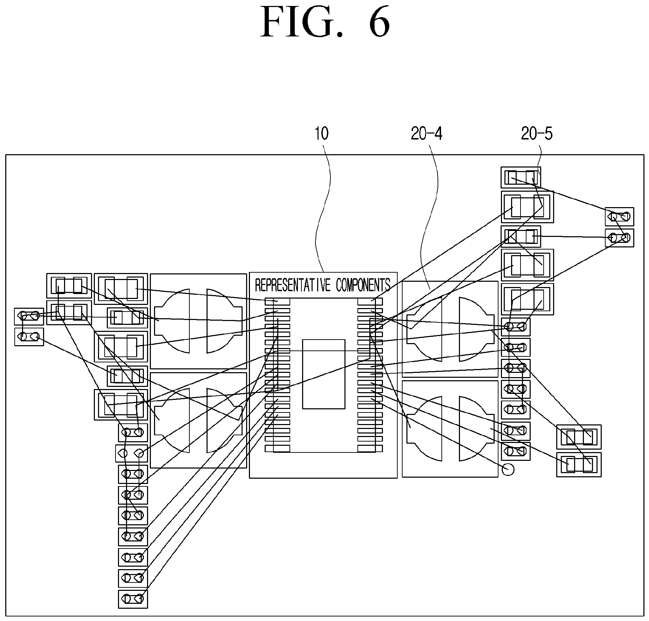

FIG. 6 is a diagram illustrating example rule information according to various embodiments.

Referring to FIG. 6, various embodiments of the present disclosure may be implemented on a single-sided PCB, a double-sided PCB, or a multi-layered PCB.

For example. a double-sided PCB may have circuit elements placed on the top side and simultaneously, have circuit elements placed on the bottom side.

Depending on the shape of the circuit elements (e.g., size, volume, etc.), there may be circuit elements that cannot be placed on the bottom side.

The one or more processors 130 according to an embodiment may provide a UI via the display 110 that allows selection of whether to place circuit elements only on the top side or on the top/bottom side (e.g., double side) when designing a PCB circuit.

When PCB circuit design that places circuit elements on the top/bottom side is selected via the UI, the one or more processors 130 may identify, based on the rule information, among the plurality of circuit elements, circuit elements that cannot be placed on the bottom side, and place the identified circuit elements on the top side.

For example, referring to FIG. 6, the one or more processors 130 may identify a relatively bulky circuit element 20-4 as a circuit element that cannot be placed on the bottom side based on the rule information.

The one or more processors 130 may place the remaining circuit elements 20-1, 20-2, ..., 20-n with reference to the representative circuit element 10. In particular, based on the rule information, the one or more processors 130 may place the remaining circuit elements 20-1, 20-2, ..., 20-n such that circuit elements that cannot be placed on the bottom side (e.g., the relatively bulky circuit element 20-4) are placed on the top side, and circuit elements that can be placed on both the top and bottom sides (e.g., a relatively less bulky circuit element 20-5) are placed on either the bottom side or the top side.

Further, based on the rule information, the one or more processors 130 may place circuit elements that cannot be placed on the top side among the remaining circuit elements 20-1, 20-2, ..., 20-n on the bottom side, and may place circuit elements that can be placed on both the top/bottom side on the bottom side or the top side.

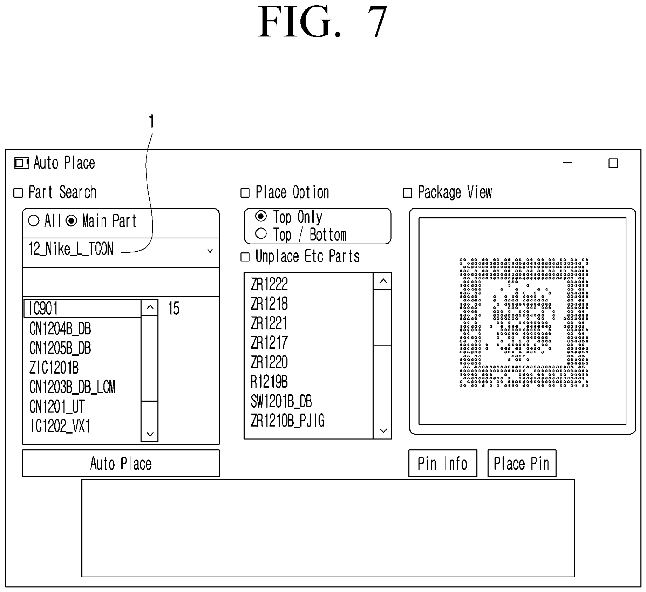

FIG. 7 is a diagram illustrating an example user interface (UI) and a representative circuit element in the form of Ball Grid Array (BGA) according to various embodiments.

FIG**.** 7 illustrates a case in which the representative circuit element 10 is in the form of BGA.

Referring to FIG. 7, the BGA shape includes a plurality of pins, where the pins are attached to the bottom surface of the package.

As shown in FIG. 7, since the BGA-type direct circuit includes a plurality of pins, it is possible to design a PCB not by placing the remaining circuit elements 20-1, 20-2, ..., 20-n with reference to the direct circuit, e.g., the representative circuit element 10, but by dividing the PCB into a plurality of parts (or, blocks) according to a function of the electronic device.

Thus, when the representative circuit element 10 is a direct circuit in the form of BGA, the one or more processors 130 may provide a UI as shown in FIG. 7.

Referring to the UI shown in FIG. 7, a user may select one of a plurality of electronic circuit information.

Each of the plurality of electronic circuit information may be electronic circuit information depicting a part of the electronic device (or a function of the electronic device), including a plurality of circuit elements connected to the representative circuit element 10, with the representative circuit element 10 being a BGA-type direct circuit.

As shown in FIG. 7, when the electronic circuit information 1 for PCB design, e.g. a part of the electronic device, is selected through the UI, the one or more processors 130 may provide a connection relationship between the plurality of circuit elements included in the selected electronic circuit information 1 and a direct circuit in the form of BGA.

For example, the one or more processors 130 may provide pins connected to the plurality of circuit elements included in the electronic circuit information 1 selected from the plurality of pins included in the direct circuit in a different color (or pattern) from the remaining pins.

For example, as shown in FIG. 7, when the electronic circuit information 1 to be designed for a PCB is a TCON Part, among the plurality of pins included in the direct circuit, the pins connected to the plurality of circuit elements included in the electronic circuit information 1 may be provided in a different color (or pattern) from the remaining pins.

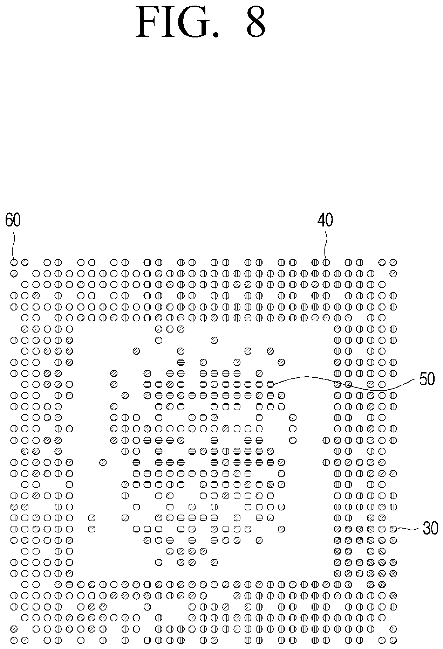

FIG. 8 is a diagram illustrating a representative circuit element in the form of BGA according to various embodiments.

Referring to FIG. 8, the one or more processors 130 may provide a pin 30 connected to the plurality of circuit elements included in the electronic circuit information 1 among the plurality of pins included in the direct circuit in a different pattern (e.g., a first pattern) (or a different color (e.g., a first color)) from the remaining pins.

Thus, when designing a PCB, if a plurality of circuit elements are placed adjacent to an area where a plurality of pins provided in the first pattern are present, the plurality of circuit elements included in the selected electronic circuit information 1 may be placed adjacent to the pin 30 connected to the plurality of circuit elements among the plurality of pins included in the direct circuit.

Further, in the UI shown in FIG. 7, when the electronic circuit information 1 to be designed for a PCB is a part other than the TCON part (e.g., a communication interface part), the one or more processors 130 may provide pins different from those in FIG. 8 among the plurality of pins included in the direct circuit in the first pattern.

Referring to FIG. 8, when designing a PCB including a direct circuit in the form of BGA, the one or more processors 130 may provide each of the plurality of pins included in the BGA-type direct circuit in a different pattern (or color) according to the type.

For example, the one or more processors 130 may provide pins connected to the plurality of circuit elements included in the electronic circuit information 1 selected from the plurality of pins included in the direct circuit in the form of BGA, in the first pattern (30 of FIG. 8) (or the first color).

In addition, the one or more processors 130 may provide pins that are signal-connected to the plurality of circuit elements included in other electronic circuit information in addition to the electronic circuit information 1 selected from the plurality of pins included in the direct circuit in the form of BGA in a second pattern (40 of FIG. 8) (or a second color).

The one or more processors 130 may provide pins connected to the power-related elements in a third pattern (50 of FIG. 8) (or a third color).

Additionally, the one or more processors 130 may provide GND pins in a fourth pattern (60 of FIG. 8) (or a fourth color). However, the distinction of the patterns, colors, and pins is an example, and is not limited thereto.

In an example, when designing a PCB, it is possible to visually identify whether each of the plurality of pins included in the direct circuit in the form of BGA is connected to the plurality of circuit elements included in the selected electronic circuit information 1, connected to the plurality of circuit elements included in other electronic circuit information, or connected to the power-related elements or the GND pins, thereby increasing the convenience of the designer when designing the PCB.

Since the one or more processors 130 automatically place the remaining circuit elements 20-1, 20-2, ..., 20-n when only the representative circuit element 10 is placed, even if the number of circuit elements increases, the circuit elements do not have to be placed manually, so there is an effect of reducing the PCB design time.

The one or more processors 130 may automatically place the remaining circuit elements 20-1, 20-2, ..., 20-n based on the rule information, may automatically rotate some of the remaining circuit elements 20-1, 20-2, ..., 20-n (e.g., by 90°), or may place some of the remaining circuit elements 20-1, 20-2, ..., 20-n on the top side or the bottom side, which may increase the convenience of the designer when designing the PCB.

The one or more processors 130 may automatically place the plurality of circuit elements and then, when one of the plurality of circuit elements is selected, display a UI for rearranging the selected circuit element.

For example, after automatically placing the plurality of circuit elements, when the representative circuit element 10 is selected from the plurality of circuit elements, the one or more processors 130 may display a UI for rearranging the representative circuit element 10. Subsequently, once the representative circuit element 10 is rearranged, the one or more processors 130 may automatically place the remaining circuit elements 20-1, 20-2, ..., 20-n based on the rule information with reference to the rearranged representative circuit element 10. However, this is merely an example, and when the representative circuit element 10 is rearranged, the one or more processors 130 may rearrange only the representative circuit element 10 and does not rearrange the remaining circuit elements 20-1, 20-2, ..., 20-n.

After placing the remaining circuit elements 20-1, 20-2, ..., 20-n based on the rule information with reference to the representative circuit element 10, the one or more processors 130 may provide a UI to enable specific and detailed placement of each of the plurality of circuit elements (e.g., artwork according to the designer's manual work).

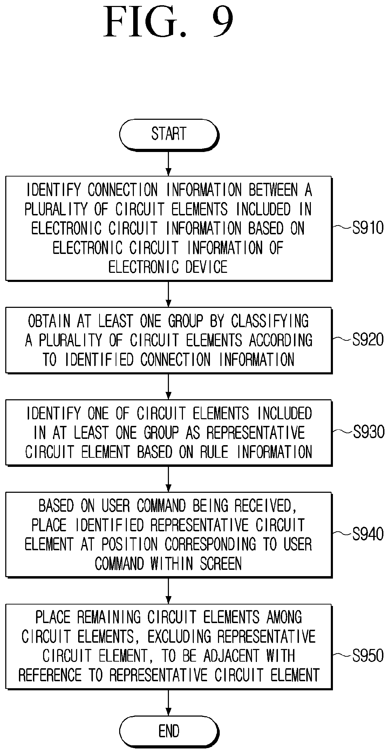

FIG. 9 is a flowchart illustrating an example method of controlling a PCB design device according to various embodiments.

The method of controlling a PCB design device including rule information applied to printed circuit board (PCB) design according to an embodiment identifies connection information between a plurality of circuit elements included in electronic circuit information based on the electronic circuit information of an electronic device (S910).

At least one group is obtained by classifying the plurality of circuit elements according to the identified connection information (S920).

One of the circuit elements included in the at least one group is identified as a representative circuit element based on the rule information (S930).

When a user command is received, the identified representative circuit element is placed at a position on the screen corresponding to the user command (S940).

The remaining circuit elements except the representative circuit element are displayed by placing them adjacent to the representative circuit element (S950).

According to an embodiment, the displaying step S950 may include identifying, among the remaining circuit elements, at least one circuit element connected to a pin included in the representative circuit element, and when the identified representative circuit element is placed, preferentially placing the identified at least one circuit element.

The displaying step S950 may include identifying at least one circuit element connected to each of a plurality of pins included in the representative circuit element, and sequentially placing the identified at least one circuit element based on the pin number of each of the plurality of pins.

According to an embodiment, the displaying step S950 may include, once a first circuit element and a second circuit element connected to pins included in the representative circuit element are identified among the remaining circuit elements, placing the first circuit element corresponding to a first depth in preference to the second circuit element corresponding to a second depth based on depth information included in the electronic circuit information with reference to the representative circuit element.

According to an embodiment, the step S930 of identifying a representative circuit element may include identifying, based on the rule information, at least one of an integrated circuit (IC), a jack, a connector, and a tuner among the circuit elements as a representative circuit element.

According to an embodiment, the step of displaying S950 may include, once the identified representative circuit element is placed, setting a priority for the remaining circuit elements based on the rule information, and sequentially placing the remaining circuit elements with reference to the representative circuit element based on the set priority.

The step of setting a priority may include setting a priority by setting a circuit element corresponding to a power-related element or a crystal element among the remaining circuit elements as the highest priority based on the rule information.

According to an embodiment, the displaying step S950 may include, when placement of circuit elements on the top and bottom of the PCB is possible according to the user setting, identifying at least one circuit element that can be placed on the bottom among the remaining circuit elements based on the rule information, and placing the identified at least one circuit element on the bottom.

The method according to an embodiment may further include, when the identified representative circuit element is in the form of ball grid array (BGA), identifying at least one pin connected to the remaining circuit elements among the plurality of pins included in the representative circuit element, and displaying the identified at least one pin differently from the remaining pins.

The method according to an embodiment may further include, when one circuit element of the remaining circuit elements is selected, displaying a user interface (UI) for rearranging the selected circuit element.

However, various embodiments of the present disclosure can be applied not only to a PCB design device but also to all types of electronic devices.

The above-described various embodiments may be implemented in a recording medium that can be read by a computer or a similar device using software, hardware, or a combination thereof. In some cases, embodiments described herein may be implemented by a processor itself. According to software implementation, embodiments such as procedures and functions described in this disclosure may be implemented as separate software. Each software may perform one or more functions and operations described in this disclosure.

Computer instructions for performing processing operations of the PCB design device according to the above-described various embodiments may be stored in a non-transitory computer-readable medium. When being executed by a processor of a specific device, the computer instructions stored in such a non-transitory computer-readable medium allows the specific device to perform processing operations in the electronic device according to the above-described various embodiments.

The non-transitory computer-readable medium refers to a medium that stores data semi-permanently and can be read by a device, rather than a medium that stores data for a short period of time, such as registers, caches, memory, etc. Examples of the non-transitory computer-readable medium may include CD, DVD, hard disk, Blu-ray disk, USB, memory card, ROM, etc.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. A Printed Circuit Board (PCB) design device comprising:
a display;
memory storing rule information applied to PCB design;
one or more processors configured to:
based on electronic circuit information of an electronic device, identify connection information between a plurality of circuit elements included in the electronic circuit information;
obtain at least one group by classifying the plurality of circuit elements according to the identified connection information;
identify one of the circuit elements included in the at least one group as a representative circuit element based on the rule information;
based on a user command being received, place the identified representative circuit element at a position corresponding to the user command within a screen of the display;
and
control the display to place and display remaining circuit elements among the circuit elements, excluding the representative circuit element, to be adjacent with reference to the representative circuit element.

2. The device as claimed in claim 1, wherein the one or more processors are configured to:
identify at least one circuit element connected to a pin included in the representative circuit element among the remaining circuit elements; and
based on the identified representative circuit element being placed, preferentially place the identified at least one circuit element.

3. The device as claimed in claim 2, wherein the one or more processors are configured to:
identify the at least one circuit element connected to each of a plurality of pins included in the representative circuit element; and
sequentially place the identified at least one circuit element based on a pin number of each of the plurality of pins.

4. The device as claimed in claim 1, wherein the one or more processors are configured to:
based on a first circuit element and a second circuit element connected to a pin included in the representative circuit element among the remaining circuit elements being identified, preferentially place the first circuit element corresponding to a first depth to the second circuit element corresponding to a second depth with reference to the representative circuit element based on depth information included in the electronic circuit information.

5. The device as claimed in claim 1, wherein the one or more processors are configured to:
identify at least one of an integrated circuit (IC), a jack, a connector, or a tuner among the circuit elements as the representative circuit element based on the rule information.

6. The device as claimed in claim 1, wherein the one or more processors are configured to:
based on the identified representative circuit element being placed, set a priority for the remaining circuit elements based on the rule information; and
sequentially place the remaining circuit elements with reference to the representative circuit element based on the set priority.

7. The device as claimed in claim 6, wherein the one or more processors are configured to:
set the priority by setting a power-related element or a circuit element corresponding to a crystal element among the remaining circuit elements as a top priority based on the rule information.

8. The device as claimed in claim 1, wherein the one or more processors are configured to:
based on placement of circuit elements on top and bottom of a PCB being possible,
identify at least one circuit element placeable on the top and bottom among the remaining circuit elements based on the rule information; and
place the identified at least one circuit element on the bottom.

9. The device as claimed in claim 1, wherein the one or more processors are configured to:
based on the identified representative circuit element being in a ball grid array (BGA) form, identify at least one pin connected to the remaining circuit elements among a plurality of pins included in the representative circuit element; and
display the identified at least one pin differently from remaining pins.

10. The device as claimed in claim 1, wherein the one or more processors are configured to:
based on one of the remaining circuit elements being selected, control the display to display a user interface (UI) for rearranging the selected circuit element.

11. A method of controlling a Printed Circuit Board (PCB) design device including rule information applied to PCB design, the method comprising:
based on electronic circuit information of an electronic device, identifying connection information between a plurality of circuit elements included in the electronic circuit information;
obtaining at least one group by classifying the plurality of circuit elements according to the identified connection information;
identifying one of the circuit elements included in the at least one group as a representative circuit element based on the rule information;
based on a user command being received, place the identified representative circuit element at a position corresponding to the user command within a screen; and
placing and displaying remaining circuit elements among the circuit elements, excluding the representative circuit element, to be adjacent with reference to the representative circuit element.

12. The method as claimed in claim 11, wherein the displaying comprises:
identifying at least one circuit element connected to a pin included in the representative circuit element among the remaining circuit elements; and
based on the identified representative circuit element being placed, preferentially placing the identified at least one circuit element.

13. The method as claimed in claim 12, wherein the displaying comprises:
identifying the at least one circuit element connected to each of a plurality of pins included in the representative circuit element; and
sequentially placing the identified at least one circuit element based on a pin number of each of the plurality of pins.

14. The method as claimed in claim 11, wherein the displaying comprises:
based on a first circuit element and a second circuit element connected to a pin included in the representative circuit element among the remaining circuit elements being identified, preferentially placing the first circuit element corresponding to a first depth to the second circuit element corresponding to a second depth with reference to the representative circuit element based on depth information included in the electronic circuit information.

15. The method as claimed in claim 13, wherein the identifying a representative circuit element comprises:
identifying at least one of an integrated circuit (IC), a jack, a connector, or a tuner among the circuit elements as the representative circuit element based on the rule information.
